# EUROPEAN PATENT SPECIFICATION

(11) **EP 2 577 025 B1**
(45) Date of publication and mention of the grant of the patent: **09.05.2018**
(21) Application number: 10731893.3
(22) Date of filing: 07.07.2010
(51) Int. Cl.: F02C 9/52, F02C 9/54

(54) **METHOD FOR INCREASING AN EMISSIONS COMPLIANT LOAD RANGE FOR A COMBINED-CYCLE SYSTEM**
VERFAHREN ZUR ERHÖHUNG EINES EMISSIONSKONFORMEN BELASTUNGSBEREICHS FÜR EIN GAS-DAMPF-SYSTEM
PROCÉDÉ POUR ACCROÎTRE UNE CAPACITÉ DE CHARGE CONFORME AUX NORMES D'ÉMISSIONS POUR UN SYSTÈME À CYCLE COMBINÉ

(30) Priority: 04.06.2010 US 351661 P
(43) Date of publication of application: 10.04.2013
(73) Proprietor: Siemens Energy, Inc., Orlando, FL 32826-2399 (US)
(72) Inventor: ELWOOD, David D., Oviedo Florida 32765 (US); WETZL, Kristian I., Orlando Florida 32826 (US); CARPENTER, Bruce H., Orlando Florida 32828 (US); PLANT, Adam D., Orlando Florida 32825 (US)
(74) Representative: Maier, Daniel Oliver
(86) International application number: PCT/US2010/041132
(87) International publication number: WO 2011/152840

(56) References cited:
- EP-A1- 1 967 717
- US-A1- 2004 055 272
- US-A1- 2009 056 342
- US-B2- 7 124 591

## Description

### FIELD OF THE INVENTION

The invention relates to combined-cycle systems, and more specifically, to a method for increasing a load range over which a combined-cycle system can operate while still achieving an emission compliant status.

### BACKGROUND OF THE INVENTION

Combined-cycle plants, combining a Rankine cycle and a Brayton cycle, typically run at or near full power output level during day-time operation. During night operation, with lower power requirements, it becomes desirable to run the plant at less than the power output level, and this has typically been effected by reducing the power output of the gas turbine system (Brayton cycle) to about 70 percent of the maximum operating load level. Ideally, from a strictly economic point of view, it might be desirable to operate the gas turbine system at much less than 70 percent of the maximum operating load level rather than shut down the plant, as a shut down would necessitate incursion of extensive start-up costs which could exceed any fuel savings realized during the shut down period. On the other hand, it has not been possible to reduce power output from gas turbine systems significantly below about 70 percent due to emissions compliance requirements, including limits on CO and NOₓ levels. Thus, while there is incentive to minimize the amount of fuel consumed when operating the plant at partial-load, economic and environmental concerns create impediments to doing so.

With regard to environmental compliance, exhaust emissions of the combined-cycle system must comply with legal requirements which are specific to the governmental authority over the geographic locality in which the plant operates. Generally, this necessitates that a minimum flame temperature be sustained during gas turbine operation. In the past it has not been possible to sustain the minimum flame temperature at less than about 70 percent of the maximum operating load level due to limitations imposed by compressor and inlet guide vane designs which necessitate the production of a minimum flow rate of compressed air which is in excess of a desired flow rate for power levels of less than about 70%. In particular, it is known that the fuel-to-air (FTA) ratio in the combustor below 70% power drops below (i.e., becomes too lean) that which is necessary to maintain a desired minimum flame temperature for CO emissions compliance. Known methods for operating such combined cycle plants include those described in United States Patent Application Publication US 2005/0235649 A1 and United States Patent US 7,124,591. It would be advantageous to provide a method or process for operating the gas turbine system of a combined-cycle power generation system at less than 70 percent of the maximum operating load level to overcome the economic disadvantages while maintaining full compliance with environmental regulations.

US 2009/0056342 A1 discloses a method for operating at partial load a gas turbine system having a compressor, a combustor, and a turbine. The method includes the steps of lowering a flow of fuel to the combustor, extracting air from the compressor so as to lower a flow of air to the compressor, and returning the extracted air to the turbine or a component of the gas turbine system other than the combustor. Extracting air from the compressor raises a combustion temperature within the combustor. Raising the combustion temperature maintains a combustion exhaust below a predetermined level, maintains stable combustion, and extends turbine turndown values.

### SUMMARY OF THE INVENTION

The present invention is specified in claim 1 of the following set of claims.

Preferred features of the present invention are specified in claims 2 to 9 of the set of claims.

### BRIEF DESCRIPTION OF THE DRAWINGS

The invention is explained in the following description in view of the drawings that show:
FIG. 1 is a schematic diagram of a portion of a combined-cycle system, illustrating components associated with operation and reduced power output of the gas turbine system in accordance with an embodiment of the invention;
FIG. 2 is a schematic diagram of a portion of a combined-cycle system in accordance with an alternate embodiment of the invention relative to the embodiment of FIG.1; and
FIG. 3 illustrates variations in gas turbine exhaust temperature as a function of operating load level for the system illustrated in FIG. 1. Ten temperatures in degrees Fahrenheit are given on the Y-axis of the graph of FIG. 3. These ten temperatures in degrees Celsius are as follows: 538°C (1000°F), 549°C (1020°F), 560°C (1040°F), 571°C (1060°F), 582°C (1080°F), 593°C (1100°F), 604°C (1120°F), 616°C (1140°F), 627°C (1160°F), and 638°C (1180°F).

### DETAILED DESCRIPTION OF THE INVENTION

When reading the following description of embodiments of the invention, it is to be understood that the concept of a combined-cycle system being "emissions compliant" refers to providing levels of CO (carbon monoxide) and/or NOₓ (nitrous oxide) in the exhaust gas of the gas turbine which are within regulatory limits which may vary based on geographic area. The invention, however, is not limited to any specific regulatory limits or emissions levels. However, it is recognized that emissions compliant limits for CO and NOₓ have, in the past, been generally met by maintaining a minimum fuel-to-air ratio (FTA) within the combustor of the gas turbine engine, such that a minimum flame temperature is maintained, a characteristic minimum gas turbine exhaust temperature may be monitored to assess whether operation the gas turbine system is operating within the regulatory limits.

Disclosed embodiments of the present invention provide a method for load reduction during a turn-down in power output from the combined-cycle system. The inventors have recognized that, in a gas turbine system of a combined-cycle system, high flame temperatures needed to comply with emissions limits can be sustained by diverting air which would otherwise pass from the compressor stage through the combustor. According to embodiments of the invention, the diverted air may be sent into disc cavities of the gas turbine for cooling, and/or into a heat recovery steam generator (HRSG). A feature of the invention is the prevention of undesirably large and relatively rapid temperature fluctuations at the input stage to the HRSG where a mixture of the diverted air and the hot exhaust gases enter the HRSG. That is, when attempting to control flame temperature by diverting compressed air, the mixing of that same diverted air with relatively hot exhaust gas can cause large time varying temperature excursions and this can adversely affect the integrity and longevity of system components.

The inventors have also recognized that a net cooling of the gases entering the HRSG can occur based on the volume of air flow which bypasses the combustor and mixes with the hot exhaust gases, to form a mixture of the bypassed air and the exhaust gas sent from the outlet of the turbine, prior to entry into the HRSG. When the relatively cool air, extracted from the compressor and injected at a point downstream of the gas turbine, mixes with the exhaust gases output from the turbine, the exhaust gas cools prior to entry into the HRSG. This, in turn, can influence the performance of the Rankine cycle. This bypass of air aids in sustaining a high flame temperature, and results in an elevated exhaust gas temperature. In accordance with the invention, the exhaust gas temperature can be elevated or otherwise regulated by a control system to influence the temperature of gases entering the HRSG. The control system can compare the exhaust temperature to an exhaust temperature set point, and then adjust the exhaust temperature based on exhaust temperature set points. The control system adjusts the exhaust gas temperature to a given set point by varying the amount of ambient air entering into the gas turbine combustor. This can be effected, in part, by opening or closing inlet guide vanes which control the amount of ambient air entering into the compressor, thereby affecting the fuel-to-air ratio (FTA) within the combustor.

For example, when the exhaust temperature set point is elevated relative to the exhaust temperature, the control system closes the inlet guide vanes and this reduces the volumetric flow rate of ambient air into the combustor, which increases the FTA within the combustor and thereby elevates both the flame temperature and the exhaust temperature of the gas turbine system. The inventors have discovered that the cooling effects of the compressed air which bypasses the combustor can be controlled based on a change in the gas turbine exhaust temperature, specifically when the flame temperature set point is adjusted to elevate the exhaust gas temperature. That is, the magnitude of temperature transients at the HRSG can be managed by simultaneously controlling a combination of exhaust temperature set points and relatively cool bypass gas flow volumes which would otherwise lead to large, rapid temperature swings at the HRSG. More specifically, it is recognized that the temperature transients at the HRSG may be minimized or eliminated by simultaneously controlling (i) the time rate of change of the injection of relatively cool bypass air into the HRSG, which causes a temperature depression, and (ii) the time rate of change of an increase in the temperature of exhaust gases output from the turbine. The magnitude of the temperature transients at the HRSG may be limited by simultaneously controlling a rate of change in the volume of the flow which bypasses the combustor and controlling the turbine exhaust temperature set point.

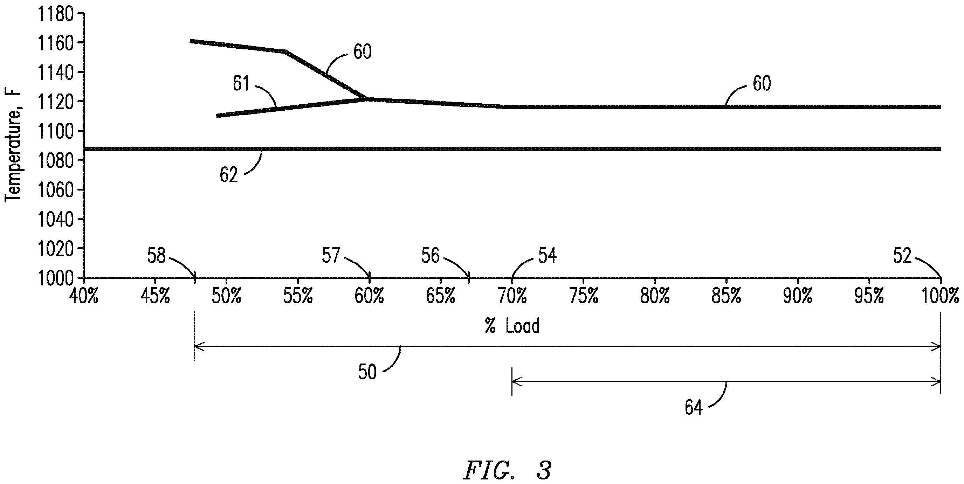

As illustrated in FIG. 3, conventional combined-cycle systems operate over a limited load range 64 from a maximum load level 52 to a load level 54, while maintaining an emissions compliant status. This arrangement has several drawbacks, such as an inability to further reduce the fuel consumption rate below the rate corresponding to the intermediate load level 54, without lowering the FTA below a minimum FTA required to remain emissions compliant. The embodiments of the present invention provide a method for extending the emissions compliant range to a load level range 50 for a gas turbine system 11, i.e., a wider range of reduced operating load levels without creating an adverse impact on the downstream HRSG. In methods according to the invention, the load level 54 is only an intermediate load level in that larger range 50 and is referred to as such. By way of example, prior systems have not been capable of operating below about 70 percent of full load level, below which the gas turbine system 11 ceases to be emissions compliant. According to an exemplary embodiment, the emissions compliant load level range 50 can extend down to 50% of the maximum operating load level. However, this is merely exemplary, and embodiments of the invention are not limited to any particular numerical level of emissions compliant levels or emissions compliant load level range.

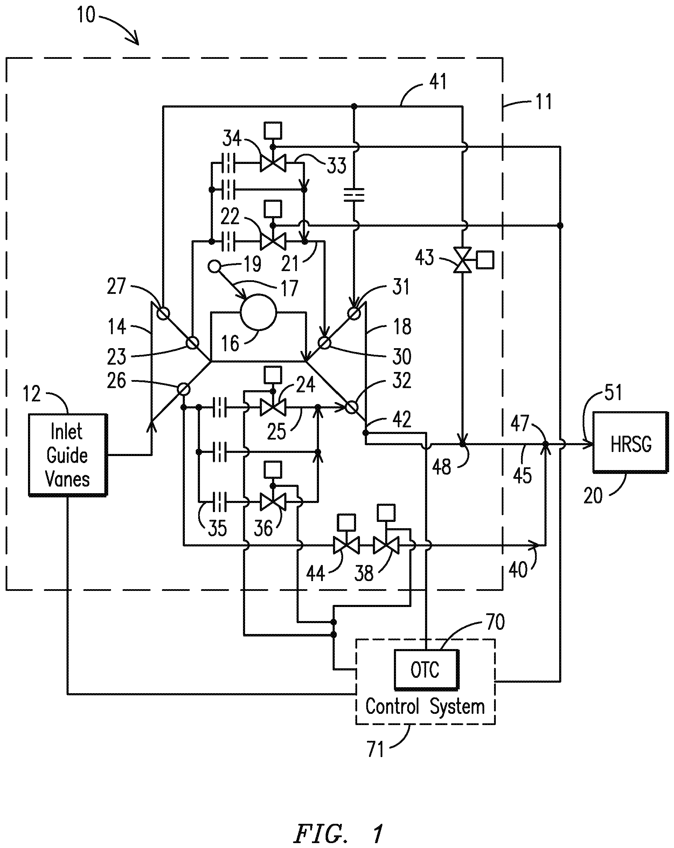

As illustrated in FIG. 1, a gas turbine system 11 of the combined-cycle system 10 includes inlet guide vanes 12 for directing ambient air into a compressor 14, from which compressed air passes into a combustor 16. Within the combustor 16, the compressed air reacts with fuel 17 which flows from a fuel source 19, and delivers hot combustion exhaust gas to a turbine 18. Within the turbine 18, the combustion gas expands to generate power, and the hot exhaust gas is then output from an outlet 42 of the turbine 18 to a heat recovery steam generator (HRSG) 20 positioned downstream from the outlet 42. As discussed above, the compressor 14 outputs compressed air to the combustor 16, but need not output all of the compressed air to the combustor 16. The compressed air that is not output to the combustor 16 may be routed through one or more flow lines 21, 25, 33, 35, 40, 41, each including a valve 22, 24, 34, 36, 38 or 43 to selectively control flow of air therethrough. A pair of first valves 22, 24 is positioned along respective flow lines 21,25 which joins different stages (e.g., the eighth and eleventh stages) 23, 26, respectively, of the compressor 14 to different stages (e.g., second and third stages) 30,32, respectively, of the turbine 18. When the first valve 22 is opened, a flow of compressed air passes from the stage 23 of the compressor 14 through the flow line 21 to the stage 30 of the turbine 18, through a passageway in a vane (not shown) of the turbine 18 and into a disc cavity region between the stages 30 and 32 of the turbine 18. When the second valve 24 is opened, a flow of compressed air passes from the stage 26 of the compressor 14 through the flow line 25 to the stage 32 of the turbine 18, through a passageway in a vane (not shown) of the turbine 18 and into a disc cavity region between the stages 32 and 31 of the turbine 18. In addition, to enhance control of large volume flow, the flow line 21 is in parallel with flow line 33 and flow line 25 is in parallel with flow line 35. The second valves 34,36 control the flow of compressed air through the lines 33, 35, respectively, each being positioned in parallel with the lines 21 or 25 so that valve 22 acts in parallel with valve 34 and valve 24 acts in parallel with valve 36. A bleed valve 38 is positioned in a bypass flow line 40 which injects a flow of compressed air from the stage 26 of the compressor 14 to an injection point 47downstream of the outlet 42 of the turbine 18, to form a mixture of bypassed air and the exhaust gas sent from the outlet 42 of the turbine 18 prior to entry into the inlet entry 51 of the HRSG 20. Upon opening of the bleed valve 38, a bypass flow of compressed air travels around the combustor 16 and is injected at the point 47 downstream of the turbine outlet 42 and upstream of the inlet entry 51 to the HRSG 20. In an exemplary embodiment, the bleed valve 38 is positioned in series with a secondary bleed valve 44, in the bypass flow line 40.

As illustrated in FIG. 1, the gas turbine system 11 includes a bleed valve 43 positioned in a bypass flow line 41 which injects a flow of compressed air from the stage 27 of the compressor 14 to a point 48 downstream of the turbine outlet 42 of the turbine 18, and upstream of the injection point 47 of the bypass flow line 40.

As illustrated in FIG. 1, a control system 71 is coupled to each of the valves 22, 24, 34, 36, 38 and 44 as well as the inlet guide vanes 12, and is configured to monitor and control the position of the inlet guide vanes 12 and the valves 22, 24, 34, 36, 38, based on one or more parameters of the combined-cycle system 10, such as power demand or load level of the combined-cycle system 10. For example, if the power demand on the combined-cycle system 10 falls below a predefined level, the control system 71 may switch into a partial-load level mode, with the control system 71 monitoring the load level of the combined-cycle system 10 and varying the position of one or more of the valves 22, 24, 34, 36, 38 and/or the inlet guide vanes 12, as discussed below, to ensure that the gas turbine system 11 is emissions compliant throughout the partial-load level operation, e.g., throughout the extended range 50.

In this and other embodiments, a plant operator may manually intervene to turn the power output down, with the control system 71 then deploying a partial load mode of operation. The foregoing reductions may occur at the commencement of a low-power demand period, such as during night operation, when the power demand placed on the combined-cycle system 10 falls below a designated level. The control system 71 includes an outlet temperature controller (OTC) 70 which is configured to (i) monitor the temperature of exhaust gas emitted from the outlet 42 of the turbine 18, (ii) compare the exhaust gas temperature with the temperature set point (stored in a memory of the OTC) and (iii) vary a position of the inlet guide vanes 12, based on this comparison, such that the amount of ambient air entering the compressor 14, and, in turn, the amount of compressed air entering the combustor 16 is adjusted to bring the exhaust temperature to equal the set point.

When the load level of the combined-cycle system 10 is initially powered down from the maximum operating load level 52 to a first intermediate level 54, such as 70% of the maximum operating load level 52, for example, the control system 71 switches into a partial-load control mode to monitor the load level of the gas turbine system 11 while varying one or more of the inlet guide vanes and the valves 22, 24, 34, 36, 38 to ensure that the system 11 remains emissions compliant.

During transition of the system 11 from the first intermediate level 54 to a second intermediate load level 57 (FIG. 3), the control system 71 continues to adjust one or more of the inlet guide vanes 12 and valves 22, 24, 34, 36, 38, as described in the sequence below. The supply of fuel 17 to the combustor 16 is further reduced, while a supply of air to the combustor 16 is simultaneously reduced to maintain a suitable FTA to sustain an emissions compliant flame temperature which is determinable based on a measurable temperature of the exhaust gases at the outlet 42 of the turbine 18. In an exemplary embodiment, the minimum exhaust temperature 62, corresponding to an emissions compliant flame temperature is 582 °C (1080°F), for a SGT6-5000F model gas turbine system. The numerical value of the exhaust temperature corresponding to an emissions compliant flame temperature is merely exemplary and embodiments of the present invention are applicable to a variety of gas turbine designs having varied emission compliant flame temperatures and resulting exhaust gas temperatures. In an exemplary embodiment, the fuel supply 17 is reduced while, simultaneously, the supply of air to the combustor 16 is reduced in a sequence of stages.

Initially, when transitioning the power level to the first intermediate level 54, the supply of fuel 17 to the combustor 16 is reduced to a first level to bring the output down to the load level 54. Simultaneously, the inlet guide vanes 12 are adjusted to reduce air intake, as the operating load level diminishes from the maximum load level 52 to the first intermediate load level 54. Subsequently, the supply of fuel 17 to the combustor 16 is further reduced to a second level to bring the output down to the second intermediate load level 56 while simultaneously opening the pair of first valves 22, 24, to provide a first bypass flow of air through line 21 and around the combustor 16, and a second bypass flow of air through line 25 and around the combustor 16 from the compressor 14 to the turbine 18. The operating load is thus reduced from the first intermediate load level 54 to the second intermediate load level 56. In an exemplary embodiment, the first valves 22,24 are opened at a rate of 10% per second, with a waiting period of 10 seconds between the opening of the valve 22 and the opening of the valve 24. Next, the supply of fuel 17 to the combustor 16 is further reduced to a third level to bring the output down to a third intermediate load level 57. Simultaneously, second valves 34, 36 positioned in parallel with the first valves 22,24, are opened to augment the amount of diverted flow, i.e., to supplement the first bypass flow through flow line 21 and the second bypass flow through line 25 around the combustor 16 via the valves 22, 24 from the compressor 14 to the turbine 18, as the operating load is reduced from the second intermediate load level 56 to the third intermediate load level 57. In an exemplary embodiment, a waiting period of 40 seconds is implemented between the time that the first valves 22,24 are fully opened and when the opening of the second valves 34,36 begins. In this exemplary embodiment, the second valves 34, 36 are opened at a rate of 5% per second, with a waiting period of 20 seconds between the time the opening of the valve 34 is initiated and the opening of the valve 36 is initiated. In an exemplary embodiment, the system 71 adjusts the first bypass flow through the line 21 and the second bypass flow through the line 25 by controlling the first and second pairs of valves (22,24), (34,36) so that air from the high and low pressure stages 23,26 of the compressor 14 is bypassed to the stages 30,32 of the turbine 18, respectively. This limits the temperature in second and third disc cavity regions of the stages 30,32 of the turbine 18. In an exemplary embodiment, the first flow and the second flow are directed from the stages 23, 26 of the compressor 14 to the stages 30, 32 of the turbine 18, respectively, to limit the temperature in the second disc cavity region (between the stages 30 and 32) and in the third disc cavity region (between the stages 32 and 31) of the turbine 18, to a desired temperature range.

As discussed above, the gas turbine system 11 of the combined-cycle system 10 includes a control system 71 having an outlet temperature controller (OTC) 70 to compare the temperature of the exhaust gas at the outlet 42 with an adjustable exhaust temperature set point stored in a memory of the OTC 70. If the exhaust temperature is less than the exhaust temperature set point, the OTC 70 sends a signal to close the inlet guide vanes 12 and thereby reduce the supply of compressed air to the combustor 16. This increases the FTA within the combustor 16 and raises the exhaust temperature to the exhaust temperature set point. Conversely, when the exhaust temperature is greater than the exhaust temperature set point, the OTC 70 sends a signal to the inlet guide vanes 12 to open the inlet guide vanes 12 (to an open position or a near-open position). This increases the supply of compressed air to the combustor 16, reduces the FTA within the combustor 16 and reduces the exhaust temperature down to the exhaust temperature set point. As discussed above, the inlet guide vanes 12 are closed (to a closed position or a near-closed position) in order to reduce the load level from the maximum level 52 to the first intermediate level 54. Subsequently, while the operating load level is reduced to the intermediate load level 57, the first flow and the second flow of air around the combustor 16 increase the FTA and the exhaust temperature rises above the exhaust temperature set point. This causes the OTC 70 to open the inlet guide vanes 12 from the closed position (or near-closed position) to an open position (or near-open position). For example, the exhaust temperature and the exhaust temperature set point may both be 566 °C (1050° F), and the inlet guide vanes 12 may be set to a closed position (e.g., 35 degrees relative to a fully open/closed position of 0/35 degrees - measurable with respect to the direction of flow of ambient air entering the inlet guide vanes 12 of the compressor). As the first and second flows of air bypass the combustor 16, the FTA and exhaust temperature (see curve 60 of FIG. 3) may rise to 577 °C (1070F), after which time the OTC 70 compares the exhaust temperature 60 at 577 °C (1070 ° F) to the exhaust temperature set point of 566 °C (1050 °F), and transmits a signal to open the inlet guide vanes 12, until the exhaust temperature equals the exhaust temperature set point.

As the operating load level is reduced from the intermediate load level 57 to an emissions compliant load level limit 58 (see FIG. 3), there is an increase in flow of compressor air on line 40 which bypasses the combustor 16 as it travels from the compressor 14 to the injection point 47 downstream of the turbine outlet 42 and into the inlet 51 of the HRSG 20. This bypass flow on line 40 is increased as the operating load level is reduced from the intermediate level 57 to an emissions compliant load level limit 58. This further reduced power corresponds to the extended emissions compliant range 50. Generally, the operating load level need not be reduced the full range, e.g., to the emissions compliant load level limit 58, and may be reduced from any higher level 57 to any lower load level within the emissions compliant load level range 50. The control system 71 is configured to selectively open the bleed valve 38 based on the rate at which the bypass flow through line 40 increases, e.g., based on a predetermined flow rate schedule such as that used in conjunction with ramping the set point for the exhaust temperature. The system 71 controls the bleed valve 38 in accord with a predefined CV (control valve) operating curve (e.g., stored in memory of the system 71), according to which a variable flow rate through the bleed valve 38 is provided. The bypass flow of compressor air on line 40 mixes with the exhaust gas travelling to the HRSG from the downstream line 45 from the outlet 42 of the turbine 18, to lower the temperature 61 of the resulting mixture of bypassed air and exhaust gas at the HRSG 20. Thus, the bypass flow of compressed air through the line 40 has a cooling effect on the temperature 61 of the resulting mixture at the HRSG 20. As the operating load level is reduced from the intermediate level 57 to the emissions compliant load level limit 58, the exhaust temperature set point of the turbine 18 is increased, by the OTC 70, to increase the temperature of the exhaust gas, at the outlet 42 of the turbine 18, in a coordinated manner with the bypass flow of compressed air through the line 40. Thus, increasing the exhaust temperature set point has a heating effect on the mixture of the bypassed air and the exhaust gas at the HRSG 20. An exemplary increase in the exhaust gas temperature is shown by the temperature curve 60. Noting that the exhaust temperature set point is increased as the system 11 approaches the load level limit 58, the exhaust temperature increases when the OTC 70 determines that the exhaust temperature is less than the increasing exhaust temperature set point. Consequently, the inlet guide vanes 12 are closed to reduce the air supplied to the combustor 16 and increase the FTA within the combustor 16. Thus, the inlet guide vanes 12 may be initially closed as the operating load is reduced to the first intermediate load level 54, but are then opened as the operating load level is further reduced to the intermediate load level 57 because the amount of air being bypassed exceeds the reduction necessary for emissions compliance at the reduced power level, followed by being closed again as the operating load level is reduced to the emissions compliant load level limit 58. The particular angles at which the inlet guide vanes 12 are opened or closed will vary, depending on the configuration of the system 11. In an exemplary embodiment, the fully open position of the inlet guide vanes 12 is referenced as zero degrees, while the position of the inlet guide vanes 12 when air intake is most limited is referenced as 35 degrees relative to the fully open position. According to the invention, by increasing the exhaust temperature set point, the turbine exhaust temperature (see temperature curve 60) remains above the minimum exhaust temperature 62 which corresponds to the minimum flame temperature within the combustor 16 that is emissions compliant. Elevation of the exhaust temperature above the minimum temperature 62 has the effect of further elevating the temperature when the exhaust gases mix with the bypass flows of compressor air as indicated by the mixed gas temperature curve 61. This corresponds to the temperature at a point immediately prior to entry of the mixture of exhaust gas and bypassed compressor air into the HRSG 20. As the operating load is reduced from the intermediate load level 57 to the emissions compliant load level limit 58, the heating effect per the curve 60 of the exhaust gases, which is attributable to the increase in the exhaust temperature set point, counters the cooling effect attributable to the volumetric increase in the bypass flow on line 40, in a coordinated manner. This is a controlled blending of exhaust gas flow and the flow of compressor air which bypasses the combustor. According to embodiments of the invention, the controlled blending limits the time rate of change of the temperature fluctuations of the resulting mixture of exhaust gas and compressor air entering the HRSG 20 to an upper limit of the time rate of change, above which damage to the HRSG 20 occurs. That is, the control system 71 limits the range of temperature fluctuation and/or rate of change in temperature fluctuations of the gases entering the HRSG to the upper limit of the time rate of change. Thus the operating load level is reduced to the emissions compliant load level limit 58 while complying with limits placed on temperature fluctuations in the gases entering the HRSG. In an exemplary embodiment, the upper limit of the time rate of change may be 10 degrees/minute, for example. As illustrated in FIG. 3, the change in downstream exhaust temperature for gases entering the HRSG (per curve 61) is relatively small and approximately linear with respect to the change in load level. The characteristic of curve 61, being exemplary, results because the exhaust temperature 60 continuously increases as the operating load level is reduced. That is, as the system 11 transitions from the intermediate load level 57 to the emissions compliant load level limit 58, the increasing volume of the relatively cool bypass flow on line 40 is mixed with exhaust gas of increasing temperature.

In an exemplary embodiment, the control system 71 (including the OTC 70) is provided with a synchronized schedule according to which an increase in the bleed flow through line 40 and an increase in the exhaust temperature set point are coordinated to minimize the magnitude of temperature excursions at the HRSG. The schedule provides a rate of air flow which is a function of the reduction of the operating load level, such as from the intermediate load level 57 to the emissions compliant load level limit 58, for example. Based on the schedule, the control system 71 controls the air flow rate to provide a maximum air flow rate, which occurs when the operating load level is at the emissions compliant load level limit 58. For example, the schedule may instruct the control system 71 (via the OTC 70) to increase the bleed flow through line 40 to fifty percent of the maximum value and increase the exhaust temperature set point by half of the programmed maximum exhaust temperature set point increase, when the operating load level is being reduced to a half-way point between the intermediate load level 57 and the emissions compliant load level limit 58. For example, when the operating load level is being reduced to a half-way point between the intermediate load level 57 and the emissions compliant load level limit 58, the schedule may instruct the control system 71 to increase the bleed flow rate through line 40 from zero to 22.68 kg/min (zero to 50 lbs/min) (50 percent of the maximum bleed flow rate of 45.36 kg/min (100 lbs/min)), and instruct the control system 71 (OTC 70) to increase the exhaust temperature set point from 566 °C (1050° F) to 593 °C (1100° F) (50 percent to the maximum exhaust temperature set point of 621 °C (1150° F)). The control system 71 ensures a coordinated increase of the bleed flow rate through the line 40 with the change in exhaust temperature set point. Although the above example addresses one specific bleed flow rate and one specific exhaust temperature set point for a specific load level, it is to be understood that the schedule includes a series of air flow rates coordinated with a series of exhaust temperature set points to effect a continual decrease in load level from a maximum output level 52 to the emissions compliant load level limit 58.

In exemplary embodiments, the bypass flow through the line 40 may be increased in stages, as the load is reduced from the intermediate load level 57 to the emissions compliant load level limit 58. For example, the flow through line 40 may be increased by a first portion during a first time interval; and then increased by a second portion during a second time interval, where the first and second portions within the respective first and second time intervals are based on the predetermined rate at which the bypass flow rate is delivered to the HRSG 20. In this embodiment, the exhaust temperature set point is also incrementally increased to a first temperature and then to a second temperature, during the first time interval and the second interval, respectively. Accordingly, each adjustment of the exhaust temperature set point, during the first and second time intervals, is based on the predetermined rate of temperature increase which is coordinated with a corresponding change in volumetric bypass flow rate through the line 40. As illustrated in FIG. 1, the bypass flow through the line 40 is controlled by movement of the bleed valve 38. The incremental increases in the flow through the line 40 (e.g., by the aforedescribed first and second portions) may be accomplished in accord with the predefined CV curve for opening the bleed valve 38 by predetermined amounts during the first and second time intervals, respectively. In another example, the bleed valve 38 is partially opened by the first amount during the first time interval, to increase the bypass flow through the line 40, to a percentage of a maximum flow rate, and is then fully opened during the second time interval, to increase the bypass flow through the line 40 to the maximum flow rate. The maximum flow rate may be expressed as a maximum volumetric mass flow rate, such as 45.36 kg/min (100 lbs/min), for example. In the exemplary embodiment, the exhaust temperature set point is increased by the first temperature during the first time interval, such that the exhaust temperature is greater than the emissions compliant threshold temperature 62 (which is indicative of a threshold flame temperature within the combustor 16); and the time rate of change of the downstream temperature 61 at the HRSG 20 (indicated by the temperature curve 61) is less than the threshold time upper limit of the time rate of change of the downstream temperature at the HRSG 20. In the exemplary embodiment, the exhaust temperature set point is increased by the second temperature during the second time interval, such that the exhaust temperature is greater than the temperature 62 corresponding to the emissions compliant threshold flame temperature and the time rate of change of the downstream temperature at the HRSG 20 (per curve 61) is less than the upper limit of the time rate of change, after the bleed valve 38 has been fully opened, and the bypass flow through the flow line 40 has increased to the maximum flow. For example, the bypass flow through the flow line 40 may increase from zero to 22.68 kg/min (zero to 50 lbs/min) during the first time period, while the exhaust temperature set point increases from 566 °C (1050° F) to 593 °C (1100° F). Similarly, the bypass flow through the line 40 may increase from 22.68 kg/min (50 lbs/min) to 45.36 kg/min (100 lbs/min), while the exhaust temperature set point increases from 593 °C (1100° F) to 621 °C (1150° F), during the second time period.

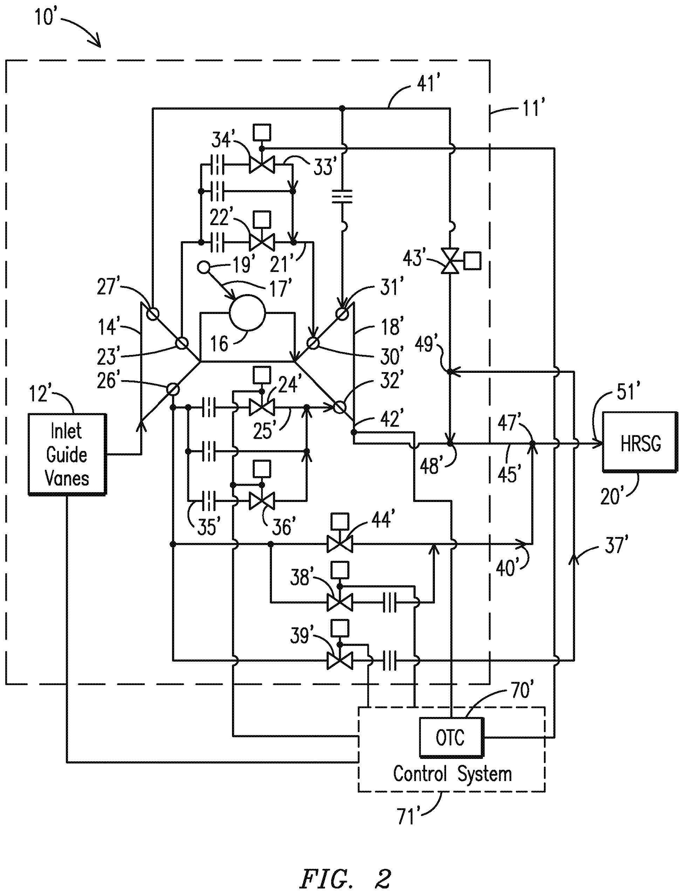

As illustrated in FIG. 2, in an alternate embodiment, a gas turbine system 11' of a combined-cycle system 10' features a first portion of bypass flow passing through a bypass line 40' and a first bleed valve 38' during the first time interval. Those elements of the combined-cycle 10' illustrated in FIG. 2, not discussed herein, with prime notation, are similar to those equivalent-numbered elements of the combined-cycle 10 illustrated in FIG. 1, without prime notation, discussed above, and require no further discussion herein. The first bleed valve 38' is positioned to pass a first portion of the bypass flow from a high pressure stage 26' of the compressor 14' through an existing line 40' between the high pressure stage 26' of the compressor 14' and to an injection point 47' downstream of the outlet 42' of the turbine 18'. In the gas turbine system 11' the second portion of the bypass flows through a line 37' between the high pressure stage 26' of the compressor 14' and a second injection point 49', and into an existing low pressure line 41' between a low pressure stage 27' of the compressor, downstream of the outlet 42' of the turbine 18'. The line 37' includes a second bleed valve 39' to pass the second portion of the bypass flow from the high pressure stage 26' of the compressor 14' to the second injection point 49' within the line 41', and subsequently downstream of the outlet 42' of the turbine 18', during the second time interval. Increasing the bypass flow by the first portion is accomplished by fully opening the bleed valve 38' during the first time interval, while increasing the bypass flow by the second portion is accomplished by fully opening the second bleed valve 39' during the second time interval. Unlike the gas turbine system 11 of the combined-cycle system 10 of FIG. 1, where the bypass flow from the high pressure stage 26 of the compressor 14 is solely directed to between the high pressure stage 26 and the injection point 47 downstream of the turbine outlet 42, the bypass flow from the high-pressure stage 26' of the compressor 14' is distributed among the line 37' to downstream of the outlet 42' and the line 40' to downstream of the outlet 42', thereby distributing the bypass flow more evenly among the flow line 37' of the gas turbine system 11'. As with the gas turbine system 11 illustrated in FIG. 1, the gas turbine system 11' includes a control system 71' to switch into a partial-load mode, upon one or more parameters of the combined-cycle system 10' falling below a threshold value. The control system 71' monitors and controls the inlet guide vanes 12' and valves 22', 24', 34', 36', 38', 39', during the partial-load mode, to ensure that the gas turbine system 11' remains emissions compliant.

The fuel 17 provided to the combustor 16 in FIG. 1 is in a ratio of premix stage to pilot stage. As appreciated by one of skill in the art, a premix stage of the fuel 17 is beneficial for the emissions compliance of the fuel 17, including the levels of CO and NOx within the fuel 17, after combustion within the combustor 16. The pilot stage of the fuel 17 is beneficial for the stability of the flame within the combustor 16. In order to achieve an ideal ratio of the premix stage to the pilot stage, the inventors have recognized that, as the operating load is reduced from the intermediate load level 57 to the emissions compliant load level limit 58, increasing the exhaust temperature set point will continuously increase the exhaust temperature at the outlet 42 of the turbine 18. As appreciated by one of skill in the art, the stability of the flame within the combustor 16 is proportional to the flame temperature within the combustor 16, which in-turn affects the exhaust temperature, and thus the pilot stage component may be continuously lowered as the combustion exhaust temperature setpoint is increased while the operating load is reduced to the emissions compliant load level limit 58. Similarly, the inventors have recognized that emissions compliance may be increasingly challenging as the operating load is reduced to the emissions compliant load level limit 58, and thus the premix stage may be continuously increased as the operating load is reduced to the emissions compliant load level limit 58. Thus, a ratio of the premix stage to the pilot stage in the fuel 17 delivered to the combustor 16 from the fuel source 19 is increased , in coordination with the increasing of the bypass flow through the line 40 and exhaust temperature set point, as the operating load is reduced from intermediate load level 57 to the emissions compliant load level limit 58, to further enhance emissions compliance of the combined-cycle system 10, while achieving a threshold of stability in the flame required to combust the fuel 17 within the combustor 16. It should be understood that the pilot stage is not reduced below a threshold level required for threshold flame stability, and that the premix stage may be increased above a threshold level required for emissions compliance (assuming that the flame is at or above the threshold of stability).

In essence, an exemplary embodiment of the invention is provided by a method for increasing an emissions compliant load level range 50 for the combined-cycle system 10. The method includes cooling the downstream temperature 61 of the gas injected to the HRSG 20 as the operating load is reduced to a load level within the emissions compliant load level range 50 in a controlled manner which minimizes the temperature transient experienced by the HRSG. This is based on mixing exhaust gas from the outlet 42 with an increasing air flow of compressed air from the compressor 14 around the combustor 16 to the HRSG 20. The method further includes heating the exhaust gas temperature in a coordinated manner to counter a reduction in the downstream temperature 61 of the mixture entering the HRSG 20, as the operating load level is reduced to the lower load level within the emission compliant load level range 50. This is based on increasing the exhaust temperature set point. The cooling and heating steps are synchronized to counteract one another such that the time rate of change of the downstream temperature 61 at the HRSG 20 is limited as the operating load is reduced to the lower load level within the emissions compliant load level range 50.

## Claims

1. A method for increasing an emissions compliant load level range (50) for a combined-cycle power generation system (10), said emissions compliant load level range (50) being a range of an operating load level of the combined-cycle system (10) from a maximum operating load level (52) to an emissions compliant load level limit (58) below which the system ceases to be emissions compliant, said combined-cycle system (10) having a gas turbine system (11) which includes inlet guide vanes (12) for directing ambient air into a compressor (14), from which compressed air passes into a combustor (16) to react with fuel (17), and deliver exhaust gas to a turbine (18), where the exhaust gas expands to generate power, and the exhaust gas is sent from an outlet (42) of the turbine (18) to a heat recovery steam generator (HRSG)(20), said method comprising:
reducing a supply of fuel (17) to the combustor (16), while simultaneously reducing a supply of air to the combustor (16), to maintain an emissions compliant fuel-to-air ratio (FTA) and an emissions compliant flame temperature determinable based on measurable exhaust gas temperature at the outlet (42) of the turbine (18), as the operating load is reduced from the maximum operating load level (52) to an intermediate load level (57);
bypassing an air flow from the compressor (14) around the combustor (16) to form a mixture of bypassed air and the exhaust gas sent from an outlet (42) of the turbine (18) prior to entry into the HRSG (20), as the operating load level is reduced from the intermediate load level (57) to a lower load level within the emissions compliant load level range (50), said bypassing of the air flow (40) having a cooling effect on the downstream temperature (61) at the HRSG (20); and
increasing an exhaust temperature set point of the turbine (18) to increase the temperature (60) of the exhaust gas at the outlet (42) of the turbine (18) in a coordinated manner with the step of bypassing air flow from the compressor, said exhaust temperature (60) of the turbine being greater than a threshold temperature (62) corresponding to an emissions compliant flame temperature and having a heating effect on the temperature (61) of the mixture of bypassed air and exhaust gas at the HRSG (20) as the operating load is reduced from the intermediate load level (57) to the load level within the emissions compliant load level range (50), such that combination of the coordinated heating effect and the cooling effect limit the time rate of change of the temperature (61) of the mixture entering the HRSG (20) as the operating load is reduced from the intermediate load level (57) to the load level within the emissions compliant load level range (50).

2. The method of claim 1, further comprising increasing a ratio of a premix stage to a pilot stage in the fuel delivered to the combustor coordinated with the step of increasing the exhaust temperature set point as operating load is reduced from the intermediate load level to the lower load level within the emission compliant load level range (50), such that the system is emissions compliant, while achieving a threshold stability of a flame required to combust the fuel (17) within the combustor (16).

3. The method of claim 1, wherein said reducing the supply of fuel (17) while simultaneously reducing a supply of air to the combustor comprises:
reducing a supply of fuel to the combustor to a first level, while simultaneously closing the inlet guide vanes, as the operating load diminishes from the maximum load level to a first intermediate load level (54);
reducing a supply of fuel to the combustor to a second level, while simultaneously opening a pair of first valves (22,24) to bypass a respective first flow of air and a second flow of air from the compressor (14) around the combustor (16) to the turbine (18), as the operating load is reduced from the first intermediate load level to a second intermediate load level (56); and
reducing a supply of fuel to the combustor to a third level, while simultaneously opening a pair of second valves (34,36) positioned in parallel with the first valves (22,24), to supplement the first flow and the second flow from the compressor (14) around the combustor (16) to the turbine (18), as the operating load is reduced from the second intermediate load level to the intermediate load level (57).

4. The method of claim 3, wherein said first and said second flow is directed from a respective high and low pressure stage of the compressor (14) to a respective stage of the turbine, to limit a temperature of a disc cavity region of the respective stage of the turbine, to be within a respective temperature range.

5. The method of claim 1, wherein said bypassing of the air flow comprises:
bypassing the air flow by a first portion during a first time interval;
bypassing the air flow by a second portion during a second time interval;
wherein said exhaust temperature set point is respectively increased by a first temperature and a second temperature, during the first time interval and the second interval, such that the exhaust temperature is greater than the emissions compliant threshold temperature (62) and the time rate of change of the downstream temperature (61) at the HRSG is less than an upper limit of the time rate of change above which damage to the HRSG occurs, during the first and second time interval.

6. The method of claim 5, wherein said air flow passes through the bleed valve (38) positioned between a stage (26) of the compressor (14) and downstream of the outlet (42) of the turbine (18), wherein said increasing the air flow by the first and second portion is based on opening the bleed valve (38) by the respective first and second incremental amount, during the first and second time interval.

7. The method of claim 6, wherein said bleed valve (38) is opened by the first incremental amount during the first time interval, to increase the air flow to a percentage of a maximum flow, and is fully opened during the second time interval, to increase the air flow to the maximum flow;
wherein said exhaust temperature set point is increased by the first temperature during the first time interval, such that the exhaust temperature is above the emissions compliant threshold temperature (62) and the time rate of change of the downstream temperature (61) at the HRSG (20) is less than the upper limit of the time rate of change, after the bleed valve (38) has been opened by the first incremental amount and the air flow has increased to the percentage of the maximum flow;
wherein said exhaust temperature set point is increased by the second temperature during the second time interval, such that the exhaust temperature is above the emissions compliant threshold temperature (62) and the time rate of change of the downstream temperature (61) at the HRSG (20) is less than the upper limit of the time rate of change, after the bleed valve (38) has been fully opened, and the air flow has increased to the maximum flow.

8. The method of claim 5, wherein said first portion of the air flow passes through said bleed valve (38) during the first time interval, said bleed valve (38) positioned to pass the first portion of the air flow from a high pressure stage (26) of the compressor (14) to downstream of the outlet (42) of the turbine,
wherein said second portion of the air flow passes through a second bleed valve (39) during the second time interval, said second bleed valve (39) positioned to pass the second portion of the air flow from the high pressure stage (26) of the compressor (14) to downstream of the outlet (42) of the turbine, and
wherein increasing the air flow by the first portion is accomplished by fully opening the bleed valve (38) during the first time interval, said increasing the air flow by the second portion is accomplished by fully opening the second bleed valve (39) during the second time interval.

9. The method of claim 1, wherein the inlet guide vanes are opened from a more closed position to a more open position as the operating load is reduced to the intermediate load level (57), based on the reduced supply of air to the combustor (16), such that the FTA is increased and the exhaust temperature (60) exceeds the exhaust temperature set point;
and wherein as the operating load is reduced from the intermediate load level (57) to the load level within the emission compliant load level range (50), and the temperature set point is increased, the exhaust temperature is less than the increasing exhaust temperature set point, the inlet guide vanes are closed to the more closed position from the more open position.

## Patentansprüche

1. Verfahren zum Vergrößern eines emissionskonformen Lastpegelbereichs (50) für eine Kombikraftwerksanlage (10), wobei es sich bei dem emissionskonformen Lastpegelbereich (50) um einen Bereich eines Betriebslastpegels der Kombianlage (10) handelt, der von einem maximalen Betriebslastpegel (52) bis zu einem emissionskonformen Lastpegelgrenzwert (58) reicht, unter dem die Anlage nicht mehr emissionskonform arbeitet, wobei die Kombianlage (10) eine Gasturbinenanlage (11) aufweist, zu der Eintrittsleitschaufeln (12) zum Leiten von Umgebungsluft in einen Verdichter (14) gehören, aus dem Druckluft in eine Brennkammer (16) strömt und mit Brennstoff (17) reagiert und Abgas an eine Turbine (18) liefert, wo dieses expandiert und so Strom erzeugt, und das Abgas aus einem Austritt (42) der Turbine (18) zu einem Abhitzedampferzeuger (HRSG - Heat Recovery Steam Generator) (20) weitergeleitet wird, wobei das Verfahren Folgendes umfasst:
Reduzieren einer Zufuhr von Brennstoff (17) zur Brennkammer (16) bei gleichzeitigem Reduzieren einer Zufuhr von Luft zur Brennkammer (16), damit ein emissionskonformes Verbrennungsluftverhältnis (VLV) und eine emissionskonforme Flammentemperatur erhalten bleiben, die sich auf der Grundlage einer messbaren Abgastemperatur am Austritt (42) der Turbine (18) ermitteln lässt, während die Betriebslast vom maximalen Betriebslastpegel (52) auf einen mittleren Lastpegel (57) reduziert wird,
Vorbeileiten eines Luftstroms aus dem Verdichter (14) an der Brennkammer (16) zwecks Bilden eines Gemischs aus vorbeigeleiteter Luft und aus einem Austritt (42) der Turbine (18) weitergeleitetem Abgas vor Eintritt in den HRSG (20), während der Betriebslastpegel von dem mittleren Lastpegel (57) auf einen geringeren Lastpegel innerhalb des emissionskonformen Lastpegelbereichs (50) reduziert wird, wobei das Vorbeileiten des Luftstroms (40) eine Kühlwirkung auf die stromabwärtige Temperatur (61) am HRSG (20) hat, und
Erhöhen einer Abgas-Solltemperatur der Turbine (18) zwecks Erhöhen der Temperatur (60) des Abgases am Austritt (42) der Turbine (18) in Koordination mit dem Vorbeileiten des Luftstroms aus dem Verdichter, wobei die Austrittstemperatur (60) der Turbine über einer Temperaturschwelle (62) liegt, die einer emissionskonformen Flammentemperatur entspricht, und eine Erwärmungswirkung auf die Temperatur (61) des Gemischs aus vorbeigeleiteter Luft und Abgas am HRSG (20) hat, während die Betriebslast von dem mittleren Lastpegel (57) auf den Lastpegel innerhalb des emissionskonformen Lastpegelbereichs (50) reduziert wird, so dass eine Kombination aus der koordinierten Erwärmungswirkung und der Kühlwirkung die zeitliche Änderung der Temperatur (61) des in den HRSG (20) eintretenden Gemischs begrenzt, während die Betriebslast vom mittleren Lastpegel (57) auf den Lastpegel innerhalb des emissionskonformen Lastpegelbereichs (50) reduziert wird.

2. Verfahren nach Anspruch 1, das ferner das Erhöhen eines Verhältnisses von einer Vormischstufe zu einer Zündstufe bei dem an die Brennkammer gelieferten Brennstoff in Koordination mit dem Erhöhen der Abgas-Solltemperatur umfasst, während die Betriebslast vom mittleren Lastpegel auf den geringeren Lastpegel innerhalb des emissionskonformen Lastpegelbereichs (50) so reduziert wird, dass die Anlage emissionskonform ist, während eine Stabilitätsschwelle einer zum Verbrennen des Brennstoffs (17) in der Brennkammer (16) erforderlichen Flamme erreicht wird.

3. Verfahren nach Anspruch 1, wobei das Reduzieren der Zufuhr von Brennstoff (17) bei gleichzeitigem Reduzieren einer Zufuhr von Luft zur Brennkammer Folgendes umfasst:
Reduzieren einer Zufuhr von Brennstoff zur Brennkammer auf einen ersten Pegel bei gleichzeitigem Schließen der Eintrittsleitschaufeln, während sich die Betriebslast vom maximalen Lastpegel auf einen ersten mittleren Lastpegel (54) verringert,
Reduzieren einer Zufuhr von Brennstoff zur Brennkammer auf einen zweiten Pegel bei gleichzeitigem Öffnen von zwei ersten Ventilen (22, 24) zwecks Vorbeileiten eines ersten beziehungsweise eines zweiten Luftstroms aus dem Verdichter (14) an der Brennkammer (16) zur Turbine (18), während die Betriebslast von dem ersten mittleren Lastpegel auf einen zweiten mittleren Lastpegel (56) reduziert wird, und
Reduzieren einer Zufuhr von Brennstoff zur Brennkammer auf einen dritten Pegel bei gleichzeitigem Öffnen von zwei parallel zu den ersten Ventilen (22, 24) angeordneten zweiten Ventilen (34, 36) zwecks Erhöhen des ersten und des zweiten Stroms aus dem Verdichter (14) an der Brennkammer (16) vorbei zur Turbine (18), während die Betriebslast von dem zweiten mittleren Lastpegel auf den mittleren Lastpegel (57) reduziert wird.

4. Verfahren nach Anspruch 3, wobei der erste und der zweite Strom aus einer Hoch- beziehungsweise einer Niederdruckstufe des Verdichters (14) zu einer jeweiligen Stufe der Turbine geleitet werden, damit eine Temperatur eines Scheibenhohlraumbereichs der jeweiligen Turbinenstufe so begrenzt wird, dass sie in einem jeweiligen Temperaturbereich liegt.

5. Verfahren nach Anspruch 1, wobei das Vorbeileiten des Luftstroms Folgendes umfasst:
Vorbeileiten eines ersten Teils des Luftstroms in einem ersten Zeitraum,
Vorbeileiten eines zweiten Teils des Luftstroms in einem zweiten Zeitraum,
wobei die Abgas-Solltemperatur in dem ersten und dem zweiten Zeitraum um eine erste beziehungsweise eine zweite Temperatur so erhöht wird, dass in dem ersten und dem zweiten Zeitraum die Abgastemperatur über dem emissionskonformen Temperaturschwelle (62) und die zeitliche Änderung der stromabwärtigen Temperatur (61) am HRSG unter einem oberen Grenzwert der zeitlichen Änderung liegt, über dem es zur Beschädigung am HRSG kommt.

6. Verfahren nach Anspruch 5, wobei der Luftstrom durch das Abblasventil (38) strömt, das zwischen einer Stufe (26) des Verdichters (14) und stromabwärts vom Austritt (42) der Turbine (18) angeordnet ist, wobei das Erhöhen des Luftstroms um den ersten und den zweiten Teil auf dem Öffnen des Abblasventils (38) um den ersten beziehungsweise zweiten inkrementellen Betrag in dem ersten und dem zweiten Zeitraum beruht.

7. Verfahren nach Anspruch 6, wobei das Abblasventil (38) zwecks Erhöhen des Luftstroms auf einen Prozentsatz eines Durchflussmaximums in dem ersten Zeitraum um den ersten inkrementellen Betrag und in dem zweiten Zeitraum zwecks Erhöhen des Luftstroms auf das Durchflussmaximum vollständig geöffnet wird,
wobei die Abgas-Solltemperatur in dem ersten Zeitraum um die erste Temperatur erhöht wird, so dass die Abgastemperatur über der emissionskonformen Temperaturschwelle (62) und die zeitliche Änderung der stromabwärtigen Temperatur (61) am HRSG (20) unter dem oberen Grenzwert der zeitlichen Änderung liegt, wenn das Abblasventil (38) um den ersten inkrementellen Betrag geöffnet worden ist und sich der Luftstrom auf den Prozentsatz des Durchflussmaximums erhöht hat,
wobei die Abgas-Solltemperatur in dem zweiten Zeitraum um die zweite Temperatur erhöht wird, so dass die Abgastemperatur über der emissionskonformen Temperaturschwelle (62) und die zeitliche Änderung der stromabwärtigen Temperatur (61) am HRSG (20) unter dem oberen Grenzwert der zeitlichen Änderung liegt, wenn das Abblasventil (38) vollständig geöffnet worden ist und sich der Luftstrom auf das Durchflussmaximum erhöht hat.

8. Verfahren nach Anspruch 5, wobei der erste Teil des Luftstroms in dem ersten Zeitraum durch das Abblasventil (38) strömt, das so angeordnet ist, dass es den ersten Teil des Luftstroms von einer Hochdruckstufe (26) des Verdichters (14) stromabwärts hinter den Austritt (42) der Turbine leitet,
wobei der zweite Teil des Luftstroms in dem zweiten Zeitraum durch ein zweites Abblasventil (39) strömt, das so angeordnet ist, dass es den zweiten Teil des Luftstroms von der Hochdruckstufe (26) des Verdichters (14) stromabwärts hinter den Austritt (42) der Turbine leitet, und
wobei das Erhöhen des Luftstroms um den ersten Teil durch vollständiges Öffnen des Abblasventils (38) in dem ersten Zeitraum und das Erhöhen des Luftstroms um den zweiten Teil durch vollständiges Öffnen des zweiten Abblasventils (39) in dem zweiten Zeitraum erzielt wird.

9. Verfahren nach Anspruch 1, wobei die Eintrittsleitschaufeln aus einer mehr geschlossenen Position in eine weiter geöffnete Position geöffnet werden, während die Betriebslast auf der Grundlage der geringeren Zufuhr von Luft zur Brennkammer (16) auf den mittleren Lastpegel (57) reduziert wird, so dass sich das VLV erhöht und die Abgastemperatur (60) die Abgas-Solltemperatur übersteigt,
und wobei, während die Betriebslast von dem mittleren Lastpegel (57) auf den Lastpegel innerhalb des emissionskonformen Lastpegelbereichs (50) reduziert und die Solltemperatur erhöht wird, die Abgastemperatur unter der sich erhöhenden Abgas-Solltemperatur liegt und die Eintrittsleitschaufeln aus der weiter geöffneten Position in die mehr geschlossene Position geschlossen werden.

## Revendications

1. Procédé d'augmentation d'une fourchette (50) de niveaux de charge conformes aux normes sur les émissions pour un système (10) de production d'énergie à cycle combiné, ladite fourchette (50) de niveaux de charge conformes aux normes sur les émissions étant une fourchette d'un niveau de charge d'exploitation du système (10) à cycle combiné allant d'un niveau maximal (52) de charge d'exploitation à un niveau limite (58) de charge conforme aux normes sur les émissions en dessous duquel le système cesse d'être conforme aux normes sur les émissions, ledit système (10) à cycle combiné comportant un système (11) à turbine à gaz qui comprend des aubes directrices (12) d'admission servant à diriger de l'air ambiant jusque dans un compresseur (14) d'où de l'air comprimé passe dans un dispositif de combustion (16) pour réagir avec un combustible (17) et fournir un gaz d'échappement à une turbine (18) où le gaz d'échappement se détend pour produire de la puissance, et le gaz d'échappement est envoyé depuis une sortie (42) de la turbine (18) à un générateur de vapeur à récupération de chaleur (HRSG) (20), ledit procédé consistant :
à réduire une amenée du combustible (17) au dispositif de combustion (16) tout en réduisant simultanément une amenée d'air au dispositif de combustion (16) en vue de préserver un rapport combustible-air (FTA) conforme aux normes sur les émissions et une température de flamme conforme aux normes sur les émissions et déterminable sur la base d'une température de gaz d'échappement mesurable à la sortie (42) de la turbine (18) à mesure que l'on réduit la charge d'exploitation depuis le niveau maximal (52) de charge d'exploitation jusqu'à un niveau intermédiaire (57) de charge ;
à dériver un flux d'air venant du compresseur (14) autour du dispositif de combustion (16) pour former un mélange avec l'air dérivé et le gaz d'échappement venant d'une sortie (42) de la turbine (18) avant son entrée dans le HRSG (20) à mesure que l'on réduit le niveau de la charge d'exploitation depuis le niveau intermédiaire (57) de charge jusqu'à un niveau de charge inférieur compris dans la fourchette (50) des niveaux de charge conformes aux normes sur les émissions, ladite dérivation du flux d'air (40) ayant un effet de refroidissement sur la température aval (61) au niveau du HRSG (20), et
à augmenter un point de consigne de la température d'échappement de la turbine (18) pour augmenter la température (60) du gaz d'échappement à la sortie (42) de la turbine (18) de manière coordonnée avec l'étape consistant à dériver un flux d'air venant du compresseur, ladite température d'échappement (60) de la turbine étant supérieure à une température seuil (62) correspondant à une température de flamme conforme aux normes sur les émissions et ayant un effet de réchauffe sur la température (61) du mélange d'air dérivé et de gaz d'échappement au niveau du HRSG (20) à mesure que l'on réduit la charge d'exploitation depuis le niveau intermédiaire (57) de charge jusqu'au niveau de charge compris dans la fourchette (50) des niveaux de charge conformes aux normes sur les émissions, de telle sorte que la combinaison de l'effet de réchauffe coordonné et de l'effet de refroidissement limite le taux de changement temporel de la température (61) du mélange entrant dans le HRSG (20) à mesure que l'on réduit la charge d'exploitation depuis le niveau intermédiaire (57) de charge jusqu'au niveau de charge compris dans la fourchette (50) des niveaux de charge conformes aux normes sur les émissions.

2. Procédé selon la revendication 1, consistant par ailleurs à augmenter un rapport entre un étage prémélangeur et un étage pilote dans le combustible fourni au dispositif de combustion de façon coordonnée avec l'étape consistant à augmenter le point de consigne de la température d'échappement à mesure que l'on réduit la charge d'exploitation depuis le niveau intermédiaire de charge jusqu'au niveau inférieur de charge compris dans la fourchette (50) des niveaux de charge conformes aux normes sur les émissions, de telle sorte que le système soit conforme aux normes sur les émissions, tout en atteignant un seuil de stabilité d'une flamme requis pour brûler le combustible (17) dans le dispositif de combustion (16).

3. Procédé selon la revendication 1, dans lequel ledit fait de réduire l'amenée du combustible (17) tout en réduisant simultanément une amenée d'air au dispositif de combustion consiste :
à réduire une amenée de combustible au dispositif de combustion jusqu'à un premier niveau tout en fermant simultanément les aubes directrices d'admission à mesure que la charge d'exploitation diminue du niveau maximal de charge à un premier niveau intermédiaire (54) de charge ;
à réduire une amenée de combustible au dispositif de combustion jusqu'à un deuxième niveau tout en ouvrant simultanément une paire de premières vannes (22, 24) pour dériver, respectivement, un premier flux d'air et un deuxième flux d'air venant du compresseur (14) autour du dispositif de combustion (16) jusqu'à la turbine (18) à mesure que l'on réduit la charge d'exploitation depuis le premier niveau intermédiaire de charge jusqu'à un deuxième niveau intermédiaire (56) de charge, et
à réduire une amenée de combustible au dispositif de combustion jusqu'à un troisième niveau tout en ouvrant simultanément une paire de deuxièmes vannes (34, 36) positionnées parallèlement aux premières vannes (22, 24) pour compléter le premier flux et le deuxième flux venant du compresseur (14) et contournant le dispositif de combustion (16) jusqu'à la turbine (18), à mesure que l'on réduit la charge d'exploitation depuis le deuxième niveau intermédiaire de charge jusqu'au niveau intermédiaire (57) de charge.

4. Procédé selon la revendication 3, dans lequel ledit premier et ledit deuxième flux sont dirigés depuis, respectivement, un étage à haute pression et un étage à basse pression du compresseur (14) jusqu'à un étage respectif de la turbine pour limiter une température d'une zone formant cavité de disque de l'étage respectif de la turbine afin qu'elle se situe dans une fourchette respective de températures.

5. Procédé selon la revendication 1, dans lequel ladite dérivation du flux d'air consiste :
à dériver une première partie du flux d'air pendant un premier intervalle de temps ;
à dériver une deuxième partie du flux d'air pendant un deuxième intervalle de temps,
étant entendu que le point de consigne de la température d'échappement est augmenté, respectivement, d'une première température et d'une deuxième température pendant le premier intervalle de temps et le deuxième intervalle de telle sorte que la température d'échappement soit supérieure à la température seuil (62) conforme aux normes sur les émissions et que le taux de changement temporel de la température aval (61) au niveau du HRSG soit inférieure à une limite supérieure du taux de changement temporel au-dessus duquel un endommagement du HRSG se produit, pendant le premier et le deuxième intervalle de temps.

6. Procédé selon la revendication 5, dans lequel ledit flux d'air passe par la vanne de prélèvement (38) positionnée entre un étage (26) du compresseur (14) et la zone en aval de la sortie (42) de la turbine (18), étant entendu que ladite augmentation du flux d'air de la première et de la deuxième partie est basée sur l'ouverture de la vanne de prélèvement (38), respectivement, de la première et de la deuxième quantité incrémentielle, pendant le premier et le deuxième intervalle de temps.

7. Procédé selon la revendication 6, dans lequel on ouvre ladite vanne de prélèvement (38) de la première quantité incrémentielle pendant le premier intervalle de temps afin d'augmenter le flux d'air jusqu'à un pourcentage d'un flux maximal, et elle est complètement ouverte pendant le deuxième intervalle de temps afin d'augmenter le flux d'air jusqu'à l'écoulement maximal,
étant entendu que ledit point de consigne de la température d'échappement est augmenté de la première température pendant le premier intervalle de temps de telle sorte que la température d'échappement soit supérieure à la température seuil (62) conforme aux normes sur les émissions et que le taux de changement temporel de la température aval (61) au niveau du HRSG (20) soit inférieure à la limite supérieure du taux de changement temporel après que la vanne de prélèvement (38) a été ouverte de la première quantité incrémentielle et que le flux d'air a augmenté jusqu'au pourcentage du flux maximal ;
étant entendu que l'on augmente ledit point de consigne de température d'échappement de la deuxième température pendant le deuxième intervalle de temps de telle sorte que la température d'échappement soit supérieure à la température seuil (62) conforme aux normes sur les émissions et que le taux de changement temporel de la température aval (61) au niveau du HRSG (20) soit inférieure à la limite supérieure du taux de changement temporel après que la vanne de prélèvement (38) a été complètement ouverte et que le flux d'air a augmenté jusqu'au flux maximal.

8. Procédé selon la revendication 5, dans lequel ladite première partie du flux d'air passe par la vanne de prélèvement (38) pendant le premier intervalle de temps, ladite vanne de prélèvement (38) étant positionnée pour faire passer la première partie du flux d'air depuis un étage à haute pression (26) du compresseur (14) jusqu'à la zone en aval de la sortie (42) de la turbine,
étant entendu que ladite deuxième partie du flux d'air passe par une deuxième vanne de prélèvement (39) pendant le deuxième intervalle de temps, ladite deuxième vanne de prélèvement (39) étant positionnée pour faire passer la deuxième partie du flux d'air depuis l'étage à haute pression (26) du compresseur (14) jusqu'à la zone en aval de la sortie (42) de la turbine, et
étant entendu que l'augmentation du flux d'air de la première partie est accomplie en ouvrant complètement la vanne de prélèvement (38) pendant le premier intervalle de temps, ladite augmentation du flux d'air de la deuxième partie étant accomplie en ouvrant complètement la deuxième vanne de prélèvement (39) pendant le deuxième intervalle de temps.

9. Procédé selon la revendication 1, dans lequel on ouvre les aubes directrices d'admission depuis une position plus fermée jusqu'à une position plus ouverte à mesure que l'on réduit la charge d'exploitation jusqu'au niveau intermédiaire (57) de charge, sur la base de l'amenée réduite d'air au dispositif de combustion (16), de telle sorte que le FTA soit augmenté et que la température d'échappement (60) dépasse le point de consigne de la température d'échappement, et
dans lequel, à mesure que l'on réduit la charge d'exploitation du niveau intermédiaire (57) de charge jusqu'au niveau de charge compris dans la fourchette (50) de niveaux de charge conformes aux normes sur les émissions et que l'on augmente le point de consigne de la température, la température d'échappement étant inférieure au point de consigne croissant de température d'échappement, on referme les aubes directrices d'admission jusqu'à la position plus fermée à partir de la position plus ouverte.
